# EUROPÄISCHE PATENTSCHRIFT

(11) **EP 3 975 711 B1**
(45) Veröffentlichungstag und Bekanntmachung des Hinweises auf die Patenterteilung: **23.04.2025**
(21) Anmeldenummer: 20727239.4
(22) Anmeldetag: 19.05.2020
(51) Int. Cl.: A01M 7/00

(54) **STEUER- UND/ODER REGELSYSTEM FUER EIN LANDWIRTSCHAFTLICHES GERAET**
CONTROL AND/OR REGULATING SYSTEM FOR AN AGRICULTURAL DEVICE
SYSTÈME DE COMMANDE ET/OU DE RÉGULATION POUR UNE MACHINE AGRICOLE

(30) Priorität: 27.05.2019 DE 102019114085
(43) Veröffentlichungstag der Anmeldung: 06.04.2022
(73) Patentinhaber: Amazonen-Werke H. Dreyer SE & Co. KG, 49205 Hasbergen (DE)
(72) Erfinder: GROSSE PRUES, Frank, 49593 Bersenbrück (DE)
(86) Internationale Anmeldenummer: PCT/EP2020/063892
(87) Internationale Veröffentlichungsnummer: WO 2020/239519

(56) Entgegenhaltungen:
- EP-A1- 3 440 934
- EP-B1- 2 064 948
- EP-B1- 3 337 317
- DE-A1- 102016 116 809
- DE-A1- 102017 104 814
- DE-A1- 102017 114 637

## Beschreibung

Die Erfindung betrifft ein Steuer- und/oder Regelsystem für ein landwirtschaftliches Gerät. Ferner betrifft die Erfindung ein landwirtschaftliches Gerät sowie ein Verfahren zur Steuerung und/oder Regelung eines landwirtschaftlichen Geräts.

Derartige Geräte werden für landwirtschaftliche Vorrichtungen zum Ausbringen von Material, wie Düngemittel, Pflanzenschutzmittel oder Saatgut verwendet, beispielsweise für Feldspritzen. Um das Material großflächig und effizient auf dem zu bearbeitenden Feldboden auszubringen, weisen die landwirtschaftlichen Geräte ein Verteilergestänge mit mehreren Ausbringungselementen, etwa Sprühdüsen auf. Das Verteilergestänge erstreckt sich quer zur Fahrtrichtung und kann Arbeitsbreiten von bis zu 40m aufweisen. Dabei soll der Abstand zwischen dem Verteilergestänge und dem Boden über die gesamte Arbeitsbreite des Verteilergestänges möglichst konstant bleiben. Das bedeutet, dass das Verteilergestänge möglichst parallel zum zu bearbeitenden Boden gehalten wird.

Bekanntermaßen weist das Verteilergestänge ein Mittelteil, beispielhaft einen mittig gelegenen Rahmen, und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte auf. Dabei können die einzelnen Gestängeabschnitte über die zugehörigen Gelenke um vertikale Achsen verschwenkt werden und sind drehbar um die jeweilige vertikale Achse gelagert. Mittels der ausklappbaren Gestängeabschnitte kann das Verteilergestänge somit von einer platzsparenden Transportstellung in eine Arbeitsstellung überführt werden. Die Transportstellung beschreibt hierbei den eingeklappten Zustand des Verteilergestänges, bei dem die seitlichen Ausleger vollständig zum Mittelteil hin eingeklappt sind. Im Gegensatz dazu beschreibt die Arbeitsstellung jenen Zustand des Verteilergestänges, bei dem alle Gestängeabschnitte ausgeklappt sind. Mit anderen Worten weist das Verteilergestänge in der Arbeitsstellung die gesamte Arbeitsbreite auf.

Im Betrieb eines landwirtschaftlichen Gerätes mit einer derartig großen Arbeitsbreite kann es beispielsweise aufgrund des Überfahrens von Unebenheiten im Boden, Beschleunigungen oder dem Abbremsen des Geräts oder eines, das Gerät ziehenden oder tragenden, Nutzfahrzeuges zu Schwingungen des Verteilergestänges in oder entgegengesetzt zur Fahrtrichtung kommen. Aufgrund derartiger Schwingungen können sehr hohe Kräfte am Verteilergestänge auftreten und eine homogene Materialausbringung kann nicht mehr garantiert werden. Es ist daher beispielhaft aus der EP 2 829 177 B1 bekannt, Stell- und/oder Dämpfungsmittel zwischen dem Mittelteil und den Auslegern, bzw. zwischen den Gestängeabschnitten derart anzuordnen, dass das Verteilergestänge einerseits von einer Transportstellung in eine Arbeitsstellung und umgekehrt überführbar ist und andererseits eine Dämpfung von am Verteilergestänge in Fahrtrichtung auftretenden Schwingungen erfolgen kann. Die Stell- und/oder Dämpfungsmittel können beispielsweise als hydraulisch arbeitende Zylinder ausgebildet sein. Infolge von Schwingungen des Verteilergestänges entstehen hierbei Druckunterschiede in den hydraulischen Zylindern.

Zur Regelung der Dämpfung der Schwingungen sind daher die Stell- und/oder Dämpfungsmittel von einer Datenverarbeitungseinheit ansteuerbar. Hierzu wertet die Datenverarbeitungseinheit zur Generierung eines Stellsignals für die hydraulischen Zylinder die Signale von mehreren am Verteilergestänge angeordneten Sensoren zur Positions- und Geschwindigkeitsüberwachung des landwirtschaftlichen Geräts aus. Mittels der Sensoren, wie beispielsweise Radarsensoren oder Impulsgebern, wird die aktuelle Bewegungsart des landwirtschaftlichen Nutzfahrzeuges bestimmt, also ermittelt, ob das Nutzfahrzeug mit einer kontinuierlichen Geschwindigkeit bewegt oder ob das Nutzfahrzeug beschleunigt oder verzögert wird. Die Positionsüberwachung des Verteilergestänges kann mittels eines Winkelsensors erfolgen.

Es ist weiterhin aus der DE 10 2017 104 814 A1 bekannt, einen Druckoffset an einem Hydraulikzylinder bei der Steuerung des Dämpfungssystems zu berücksichtigen.

Dabei ist unter dem Druckoffset ist ein Druckunterschied zu verstehen, der in Solllage des Verteilergestänges zwischen den Druckkammern eines Hydraulikzylinders herrscht. Der Druckoffset berücksichtigt externe Kräfte, die in Solllage an dem Verteilergestänge anliegen. Solche Kräfte können beispielsweise auftreten, wenn das Gestänge nicht vollständig symmetrisch montiert ist. Sie können auch bei Hang- oder Kurvenfahrten auftreten. Dabei kann der Druckoffset individuell für die jeweiligen Hydraulikzylinder jeder hydraulischen Einrichtung des Systems variieren. Der Druckoffset soll damit die tatsächlich an dem Verteilergestänge in normalem Arbeitsbetrieb, also ohne auftretende Schwankungen, anliegenden Kräfte berücksichtigen.

Somit kann erreicht werden, dass die hydraulische Einrichtung tatsächlich nur die weiter oben beschriebenen auftretenden Schwingungen korrigiert, und darauf wirkt, dass das System in der Solllage gehalten wird.

Ein solcher Druckoffset wird in bekannter Weise als fester Wert vorgegeben. Beispielsweise kann er aufgrund von Kartendaten des zu bearbeitenden Geländes berechnet werden, oder durch den Hersteller des landwirtschaftlichen Geräts vorgegeben sein. Der feste Wert kann beispielsweise durch einen Benutzer an die Steuereinrichtung übergeben werden. Dies kann direkt geschehen oder mittels eines externen Geräts, beispielsweise eines Computers oder Smartphones. Allerdings kann dies nachteilig sein, falls der vorgegebene Wert von dem tatsächlichen Wert abweicht, also wenn in der Solllage ein anderer Druckunterschied herrscht als der vorgegebene Druckoffset. Das System wird dann versuchen, auf den "falschen" Wert zu regeln. Dies kann im Extremfall dazu führen, dass das System kontinuierlich in eine Richtung regelt, um den "falschen" Wert zu erreichen, ohne dass dieser Wert jemals erreicht werden kann.

Liegt beispielsweise in Wirklichkeit ein Druckunterschied von 35 bar in der Solllage an dem Hydraulikzylinder an, und es ist ein Druckoffset von 30 bar vorgegeben, so wird das System ständig versuchen, den Wert 30 bar zu erreichen. Da dies aber aufgrund der externen Kräfte nicht möglich ist, wird das System den Hydraulikzylinder in eine Richtung bis zum Maximum bewegen.

Der Erfindung liegt daher die Aufgabe zugrunde, ein zuverlässiges Steuer- und/oder Regelsystem für ein landwirtschaftliches Gerät anzugeben, bei dem eine präzise Dämpfung von auftretenden Schwingungen in oder entgegengesetzt zur Fahrtrichtung erfolgen kann. Solche Schwingungen werden im Folgenden auch als Schwingungen in horizontaler Richtung bezeichnet. Grundsätzlich kann dieses Regelsystem auch für Schwingungen in vertikaler Richtung verwendet werden, also Schwingungen um eine horizontale Achse.

Diese Aufgabe wird gelöst durch ein Steuer- und/oder Regelsystem gemäß Anspruch 1. Bevorzugte Ausführungsformen sind in den abhängigen Ansprüchen beschrieben.

Dadurch, dass erfindungsgemäß der Druckoffset von dem Steuer- und/oder Regelsystem basierend auf verarbeiteten Signalen der Sensoreinrichtung bestimmt wird, wird verhindert, dass der Druckoffset nicht die tatsächlichen Bedingungen während des Betriebs des landwirtschaftlichen Geräts wiedergibt. Insbesondere können die Signale der Sensoreinrichtung hierbei verwendet werden, um einen Druckverlauf an der hydraulischen Einrichtung während des Betriebs zu überwachen. Dieser Druckverlauf wird generell eine "quasi-statische" Komponente sowie eine "dynamische" Komponente aufweisen. Dabei handelt es sich bei der quasi-statischen Komponente um einen Wert der sich, wenn überhaupt, nur langsam ändert. Die dynamische Komponente besteht hingegen aus Schwankungen, die, beispielsweise aufgrund der oben beschriebenen Schwingungen, um den Wert der statischen Komponente auftreten. Dabei treten die Schwankungen der dynamischen Komponente auf einer, mit Änderungen der quasi-statischen Komponente verglichen, kurzen Zeitskala auf. Beispielsweise ist eine typische Zeitskala für eine Änderung der quasi-statischen Komponente mehrere 10 Sekunden, während Änderungen in der dynamischen Komponente auf einer Zeitskala von 1 Sekunde oder weniger auftreten.

Mit anderen Worten stellt die quasi-statische Komponente den Druckoffset in Solllage dar. Mit dem erfindungsgemäßen Steuer- und/oder Regelsystem wird also der tatsächliche Druckoffset im Betrieb des landwirtschaftlichen Geräts ermittelt. Dies stellt sicher, dass das System die hydraulische Einrichtung immer unter Berücksichtigung der tatsächlich an dem Gerät, aufgrund von Schwingungen, auftretenden Kräfte steuert.

Die Sensoreinrichtung kann einen oder mehrere Sensoren umfassen. Die Sensoren können als Drucksensor zur direkten Druckmessung, insbesondere als Druckmessumformer, ausgebildet sein. Eine solche Ausbildung als Drucksensor hat den Vorteil, dass hierdurch sowohl ein Relativdruck, als auch ein Absolutdruck ermittelt werden können. Weiterhin können die Sensoren vorzugsweise als Differenzdruckmessumformer zur Ermittlung eines Differenzdrucks, beziehungsweise eines auftretenden Druckunterschieds, ausgebildet sein. Vorteilhafterweise können die Druckmessumformer den zu messenden Druck über eine Messmembran erfassen, welche in Abhängigkeit vom jeweiligen Druck mechanisch umgeformt wird. Diese mechanische Veränderung wird elektronisch gemessen, als analoges oder digitales Ausgangssignal ausgegeben und an die Datenverarbeitungseinheit übermittelt. Die Sensoreinrichtung kann hierbei auch eine Kombination aus Sensoren verschiedenen Typs umfassen.

In der Solllage kann sich das Verteilergestänge in der der weiter oben beschriebenen Arbeitsstellung befinden. Insbesondere zeichnet sich die Solllage des Verteilergestänges dadurch aus, dass keine, beziehungsweise eine möglichst geringe, Relativbewegung zwischen dem Mittelteil und dem Verteilergestänge selbst, insbesondere in Fahrtrichtung, auftritt. Insbesondere treten in der Solllage keine, beziehungsweise möglichst geringe, Relativbewegungen aufgrund von Schwingungen des Verteilergestänges, insbesondere in Fahrtrichtung, auf. Dabei ist zu beachten, dass es sich bei der Solllage um eine idealisierte Lage handelt, die im Betrieb bei aktiver Dämpfung nicht ständig, bzw. nur kurzzeitig, zu erreichen ist.

Die Signale der Sensoreinrichtung können zur Bestimmung des Druckoffsets verarbeitet werden, indem sie mittels eines Tiefpassfilters gefiltert werden. Dies stellt eine einfach zu realisierende Möglichkeit dar, um die quasi-statische Komponente aus den Signalen zu extrahieren. Der Tiefpassfilter kann insbesondere als PT1-Glied implementiert sein. Der Wert einer Zeitkonstante des Tiefpassfilters kann zwischen 10 Sekunden und 60 Sekunden liegen, vorzugsweise zwischen 20 Sekunden und 40 Sekunden.

Die Sensoreinrichtung kann einen ersten Sensor und einen zweiten Sensor umfassen. In diesem Fall kann der erste Sensor dazu konfiguriert sein, einen ersten Druck zu erfassen, der einem Druck auf der Seite einer Ringfläche des Hydraulikzylinders zugeordnet ist, und der zweite Sensor dazu konfiguriert sein, einen zweiten Druck zu erfassen, der einem Druck auf der Seite einer Kolbenfläche des Hydraulikzylinders zugeordnet ist. Dies hat den Vorteil, dass sich ein Differenzdruck, insbesondere der Druckoffset, der an dem Hydraulikzylinder herrscht, präzise ermitteln lässt. Der erste und der zweite Sensor können dabei wie weiter oben ausgeführt ausgebildet sein.

Die Datenverarbeitungseinheit kann dazu konfiguriert sein, die Signale des ersten Sensors und des zweiten Sensors, insbesondere unter Berücksichtigung des Verhältnisses der Ringfläche und der Kolbenfläche des Hydraulikzylinders, zu verarbeiten, um das Stellsignal für die jeweilige hydraulische Einrichtung zu generieren. Da auf den Hydraulikzylinder wirkende Kräfte durch die jeweiligen Drücke und Flächen auf der Kolben- und Ringseite des Hydraulikzylinders bestimmt wird, werden durch die Berücksichtigung des Flächenverhältnisses die jeweiligen Drücke zueinander normiert, was eine weitere Verarbeitung der Werte vereinfacht.

Die Datenverarbeitungseinheit kann weiterhin dazu konfiguriert sein, eine Vielzahl von Druckunterschiedswerten basierend auf den Signalen des ersten Sensors und des zweiten Sensors unter Berücksichtigung des Verhältnisses der Ringfläche und der Kolbenfläche des Hydraulikzylinders zu bestimmen. Die Datenverarbeitungseinheit kann dazu konfiguriert sein, Druckunterschiedswerte in einem Zeitabstand von 5ms bis 1s zu bestimmen, vorzugsweise in einem Zeitabstand von 5ms bis 100ms. Zudem kann sie konfiguriert sein einen Filter, insbesondere einen Tiefpassfilter, auf die Vielzahl von Druckunterschiedswerten anzuwenden, und den Druckoffset basierend auf den gefilterten Druckunterschiedswerten zu bestimmen. Auf diese Weise kann der Druckoffset während des Betriebs des landwirtschaftlichen Geräts präzise bestimmt werden.

Die jeweilige hydraulische Einrichtung kann weiterhin eine Hydraulikleitung umfassen, welche zur Zu- und Abfuhr von Hydraulikflüssigkeit an den Hydraulikzylinder angeschlossen ist, sowie wenigstens eine hydraulische Ventileinheit zur Regelung des Hydraulikdrucks, wobei die Ventileinheit über ein Stellsignal der Datenverarbeitungseinheit steuerbar ist.

Die hydraulische Einrichtung kann generell als Aktor ausgebildet sein, um die elektrischen Stellsignale der Datenverarbeitungseinheit in eine mechanische Bewegung umzuwandeln und damit das Verteilergestänge sowohl von einer Transportstellung in eine Arbeitsstellung zu überführen, als auch die Dämpfung von am Verteilergestänge auftretenden Schwingungen in Fahrtrichtung zu gewährleisten. Die hydraulische Ventileinheit sorgt hierbei vorteilhafterweise für einen sicheren und schnell wirkenden Überlastungsschutz des Hydraulikzylinders. Insgesamt kann der Hydraulikdruck am Hydraulikzylinder mittels der hydraulischen Ventileinheit, welche von der Datenverarbeitungseinheit mittels eines Stellsignals angesteuert werden kann, eingestellt werden.

Die an dem jeweiligen Hydraulikzylinder angeschlossene Hydraulikleitung kann mit zumindest einem Hydraulikspeicher in Verbindung stehen. Es ist denkbar, dass das Steuer- und/oder Regelsystem einen zentralen Hydraulikspeicher umfasst, oder alternativ jeweils ein Hydraulikspeicher dem rechtsseitigen oder linksseitigen Ausleger des Verteilergestänges zugeordnet ist. Durch den Hydraulikspeicher wird vorteilhafterweise der in dem Hydraulikzylinder wirkende Hydraulikdruck erzeugt.

Es ist möglich, dass die dem jeweiligen Ausleger zugeordneten hydraulischen Einrichtungen einen geschlossenen Hydraulikkreislauf bilden, wobei die Hydraulikzylinder der hydraulischen Einrichtungen mittels einer gemeinsamen Hydraulikleitung verbunden sind. Idealerweise kann somit auf die Anbringung von einzelnen separaten Hydraulikleitungen verzichtet werden. Weiterhin kann in diesem Fall ein Sensor der Sensoreinrichtung zur Ermittlung einer auftretenden Druckänderung an den hydraulischen Einrichtungen auch an der gemeinsamen Hydraulikleitung angebracht werden.

Die wenigstens eine hydraulische Ventileinheit kann durch ein Proportionalventil gebildet werden. Insbesondere kann es sich um ein 4-Wege-Ventil handeln. Es kann sich auch um ein 2-Wege-Ventil handeln. Die hydraulische Ventileinheit kann beispielhaft auch durch ein Druckregelventil oder weitere Verschaltungen zur Veränderung des anliegenden Hydraulikdrucks in der hydraulischen Einrichtung gebildet werden.

Weiter kann die hydraulische Ventileinheit anhand einer bekannten Kennlinie elektronisch gesteuert einstellbar sein. Die Kennlinie der Ventileinheit spiegelt hierbei generell die funktionale Abhängigkeit des Ausgangssignals vom Eingangssignal wider. Idealerweise ändert sich das Ausgangssignal linear mit dem auftretenden Druck als Eingangssignal. Die ideale Kennlinie wäre demnach eine Gerade. Die gemessene, oder anders gesagt die reale Kennlinie der hydraulischen Ventileinheit kann aber nicht exakt linear sein, sondern selbst am Anfangs-und Endpunkt des Druckbereichs können die Ausgangssignale von den jeweiligen idealen Werten abweichen. Es ist daher für eine präzise Anpassung der Dämpfung von auftretenden Schwingungen am Verteilergestänge vorteilhaft, die hydraulische Ventileinheit anhand deren Kennlinie einzustellen und daher an die auftretende Druckänderung anzupassen und ihr entgegenzuwirken. Dabei kann beispielhaft über die Drucksensoren anhand der Kennlinie der Ventileinheit ermittelt werden, wie groß der benötigte Steuerstrom auf die Ventileinheit geschaltet werden muss, um der auftretenden Druckänderung entgegenzuwirken.

Weiterhin kann der erste Sensor dazu konfiguriert sein, einen Druck zu erfassen, der einem gemeinsamen Druck auf der Seite der Ringflächen aller Hydraulikzylinder des Systems zugeordnet ist. Beispielsweise kann der erste Sensor dazu konfiguriert sein, den Druck in einer Hydraulikleitung des Systems zu erfassen, welche die ringseitigen Kammern aller Hydraulikzylinder des Systems mit der Hydraulikflüssigkeit versorgt. Durch eine solche Anordnung wird das System vereinfacht, da die Gesamtanzahl der nötigen Sensoren verringert wird. Daher ist ein solches System auch kostengünstiger.

Das Steuer- und/oder Regelsystem kann weiterhin weitere Sensoren am Verteilergestänge umfassen, die dazu konfiguriert sind, eine Rotation um eine Klappachse und/oder eine Position eines Gestängeabschnitts und/oder Auslegers zu bestimmen, wobei die Datenverarbeitungseinheit dazu konfiguriert ist, das Stellsignal basierend auf der bestimmten Rotation und/oder Position zu generieren. Diese Sensoren können beispielsweise als Potentiometer ausgebildet sein. Das Potentiometer ermittelt hierbei, ob ein einzelner Gestängeabschnitt oder auch der gesamte Ausleger aus seiner Sollage ausgelenkt wird und wie sich dessen Position, bzw. Lage verändert. Die Auslenkung kann beispielsweise aufgrund einer Schwingung erfolgen. Sie kann auch aufgrund der oben beschriebenen Schwingungsdämpfung erfolgen. Die Klappachse, um die die Gestängeklappung vollführt wird, ist vorzugsweise vertikal orientiert besitzt jedoch zumindest eine vertikale Komponente. Dabei kann die Datenverarbeitungseinheit hinsichtlich der Klappachse einen Soll- Istwert-Vergleich durchführen und, basierend auf der Regeldifferenz und in Kombination mit dem Druckoffset und der Messung der auftretenden Druckänderung an der hydraulischen Einrichtung, die hydraulische Ventileinheit einstellen. Die Kombination von verschiedenen Messwerten in der Datenverarbeitungseinheit ermöglicht eine sehr präzise Einstellung der hydraulischen Ventileinheit. Ebenso können etwaige auftretende Messungenauigkeiten kompensiert werden.

Die Datenverarbeitungseinheit kann mit der Sensoreinrichtung und den jeweiligen hydraulischen Einrichtungen eine Einheit bilden. Dies impliziert eine direkte Verbindung, beispielsweise über Kabelleitungen oder kabellos, zwischen der Sensoreinheit und der Datenverarbeitungseinheit, sowie der hydraulischen Einrichtung. Daher kann das von der Sensoreinrichtung erfasste Messsignal effizient und schnellstmöglich an die hydraulische Einrichtung zur Schwingungsdämpfung über ein Stellsignal der Datenverarbeitungseinheit weitergegeben werden.

Insgesamt kann von der Datenverarbeitungseinheit, basierend auf dem Messsignal der Sensoreinrichtung und/oder der aktuellen Position des Gestängeabschnittes oder des Auslegers, die zugehörige hydraulische Ventileinheit der hydraulischen Einrichtung zur Dämpfung von am Verteilergestänge auftretenden Schwingungen angesteuert, bzw. eingestellt werden. Es ist generell denkbar, die gemessenen Signale der Sensoreinrichtung auch in einem Regelsystem als Istwert und zur Anpassung eines Sollwertes zu verwenden. Dabei kann die Datenverarbeitungseinheit derart konfiguriert sein, oder anders gesagt ein derartiges Regel-und/oder Auswerteprogramm aufweisen, dass basierend auf dem gemessenen Signal der Sensoreinrichtung als Eingangsgröße für die Regelung ein entsprechender Sollwert für die jeweilige hydraulische Einrichtung ermittelt wird, und die hydraulische Einrichtung auf den Sollwert dahingehend geregelt, bzw. eingestellt wird.

Weiterhin kann die wenigstens eine hydraulische Ventileinheit der jeweiligen hydraulischen Einrichtung des einen Auslegers unabhängig von der hydraulischen Ventileinheit der jeweiligen hydraulischen Einrichtung des anderen Auslegers durch die Steuer- und/oder Regelsystem ein-und/oder verstellbar sein. Dies bedeutet, dass die hydraulische Ventileinheit der zugehörigen hydraulischen Einrichtung des jeweiligen Auslegers unabhängig über ein elektronisches Signal von der Datenverarbeitungseinheit angesteuert werden kann. Daher ist das Steuer- und/oder Regelsystem effizient sowohl für symmetrische, als auch für asymmetrische Verteilergestänge verwendbar.

Die Erfindung stellt weiterhin ein landwirtschaftliches Gerät zum Ausbringen von Material, wie Düngemittel, Pflanzenschutzmittel oder Saatgut, umfassend ein Steuer- und/oder Regelsystem zu Verfügung. Das Steuer- und/oder Regelsystem kann dabei eines oder mehrere der oben beschriebenen Merkmale aufweisen. Das landwirtschaftliche Gerät kann insbesondere eine Feldspritze sein. Die Feldspritze kann selbstfahrend sein. Sie kann auch eine gezogene oder getragene Feldspritze sein.

Die Erfindung stellt weiterhin ein Verfahren zur Steuerung und/oder Regelung eines landwirtschaftlichen Geräts zu Verfügung. Das landwirtschaftliche Gerät besitzt ein Verteilergestänge zum Ausbringen von Material, wie Düngemittel, Pflanzenschutzmittel oder Saatgut, welches sich quer zur Fahrtrichtung erstreckt, und weist ein Mittelteil und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte auf. Hierbei ist jedem Ausleger wenigstens eine hydraulische Einrichtung zugeordnet. Die jeweilige hydraulische Einrichtung ist weiterhin zur Dämpfung von am Verteilergestänge in horizontaler und/oder vertikaler Richtung auftretenden Schwingungen ansteuerbar, und die jeweilige hydraulische Einrichtung umfasst einen Hydraulikzylinder, insbesondere einen doppeltwirkenden Hydraulikzylinder. Das Verfahren umfasst dabei die folgenden Schritte:
- Erfassen einer durch Schwingungen des Verteilergestänges in horizontaler und/oder vertikaler Richtung auftretenden Druckänderung an der jeweiligen hydraulischen Einrichtung durch eine Sensoreinrichtung.
- Generieren, auf Basis der erfassten Druckänderung, eines Stellsignals für die jeweilige hydraulische Einrichtung, wobei das Stellsignal unter Berücksichtigung eines Druckoffsets generiert wird, der einem Druckunterschied zwischen einer Ringfläche und einer Kolbenfläche des Hydraulikzylinders in einer Solllage des Verteilergestänges entspricht, wobei der Druckoffset basierend auf verarbeiteten Signalen der Sensoreinrichtung bestimmt wird.

Dabei können in dem Verfahren die Signale der Sensoreinrichtung verarbeitet werden, indem sie mittels eines Tiefpassfilters gefiltert werden.

Das Verfahren kann weiterhin die folgenden Schritte umfassen:
- Erfassen eines ersten Drucks, der einem Druck auf der Seite einer Ringfläche des Hydraulikzylinders zugeordnet ist.
- Erfassen eines zweiten Drucks, der einem Druck auf der Seite einer Kolbenfläche des Hydraulikzylinders zugeordnet ist.
- Verarbeiten des ersten Drucks und des zweiten Drucks unter Berücksichtigung des Verhältnisses der Ringfläche und der Kolbenfläche des Hydraulikzylinders.
- Generieren des Stellsignals für die jeweilige hydraulische Einrichtung auf Grundlage der verarbeiteten Druckwerte.

Zusätzlich kann das Verfahren die folgenden Schritte umfassen:
- Bestimmen einer Vielzahl von Druckunterschiedswerten basierend auf dem ersten Druck und dem zweiten Druck unter Berücksichtigung des Verhältnisses der Ringfläche und der Kolbenfläche des Hydraulikzylinders.
- Anwenden eines Filters, insbesondere eines Tiefpassfilters, auf die Vielzahl von Druckunterschiedswerten.
- Bestimmen des Druckoffsets basierend auf der gefilterten Vielzahl von Druckunterschiedswerte.

In dem Verfahren kann der erste Druck einem gemeinsamen Druck auf der Seite der Ringflächen aller Hydraulikzylinder des Systems zugeordnet sein.

Das Verfahren kann weiterhin die folgenden Schritte umfassen:
- Bestimmen einer Rotation um eine Klappachse und/oder einer Position eines Gestängeabschnitts und/oder Auslegers.
- Generieren des Stellsignals basierend auf der bestimmten Rotation und/oder Position.

Das Steuer- und Regelsystem kann eines oder mehrere der oben beschriebenen Merkmale aufweisen.

Weitere Merkmale und Vorteile der Erfindung werden nachfolgend anhand der beispielhaften Figuren erläutert. Dabei zeigt:
- Fig. 1: schematisch ein Verteilergestänge mit einem Steuer- und/oder Regelsystem und mit einem Mittelteil und zwei mit dem Mittelteil verbundene seitliche Ausleger in Draufsicht;
- Fig. 2: schematisch eine Detailansicht eines Verteilergestänges mit einem Steuer- und/oder Regelsystem und mit einem Mittelteil und zwei mit dem Mittelteil verbundene seitliche Ausleger;
- Fig. 3: schematisch einen Regelschaltplan für ein Steuer- und/oder Regelsystem;
- Fig. 4: schematisch eine Verfahren zur Bestimmung eines Druckoffsets;
- Fig. 5: schematisch einen Regelschaltplan für ein Steuer- und/oder Regelsystem;
- Fig. 6: schematisch einen Hydraulikschaltplan für ein Steuer- und/oder Regelsystem gemäß einem Ausführungsbeispiel;
- Fig. 7: schematisch einen Hydraulikschaltplan für ein Steuer- und/oder Regelsystem gemäß einem weiteren Ausführungsbeispiel; und
- Fig. 8: schematisch einen Hydraulikschaltplan für ein Steuer- und/oder Regelsystem gemäß einem weiteren Ausführungsbeispiel.

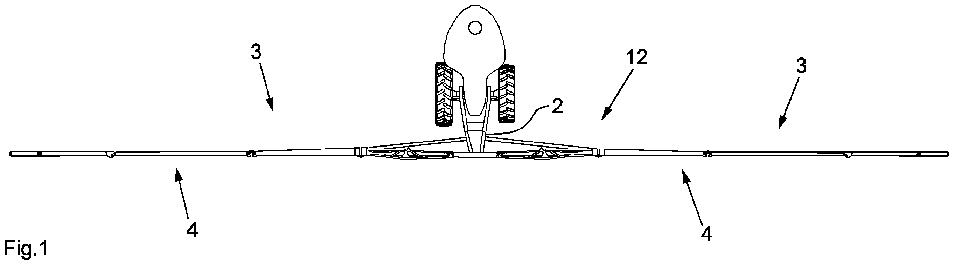

Fig. 1 zeigt schematisch ein Verteilergestänge 12 zur Verwendung mit einem erfindungsgemäßen Steuer- und/oder Regelsystem für ein landwirtschaftliches Gerät in Draufsicht. Das landwirtschaftliche Gerät ist hier als Feldspritze ausgebildet. Das Verteilergestänge 12 dient der Ausbringung von Material, wie Düngemittel, Pflanzenschutzmittel oder Saatgut und erstreckt sich quer zur Fahrtrichtung. Das Verteilergestänge 12 weist ein Mittelteil 2 und zwei mit dem Mittelteil 2 verbundene seitliche Ausleger 3 mit mehreren zueinander in Transportstellung einklappbaren und in Arbeitsstellung ausklappbaren, durch Gelenke verbundene Gestängeabschnitten 4 auf.

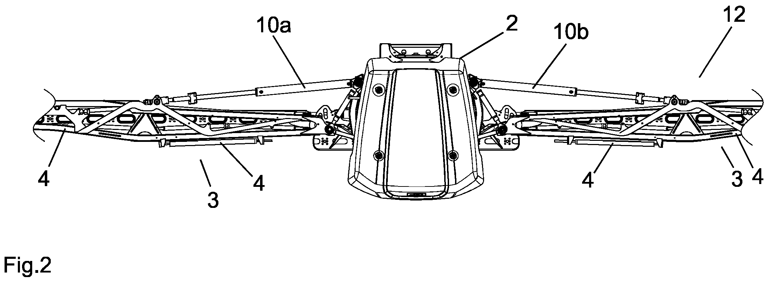

Fig. 2 zeigt schematisch eine Detailansicht des in Fig. 1 gezeigten Verteilergestänges 12. Es ist zu sehen, dass dem rechten und linken Ausleger 3 jeweils ein Hydraulikzylinder 10 a, b zugeordnet ist, welcher mit dem Mittelteil 2 und dem jeweiligen Ausleger 3 verbunden ist. Mittels des jeweiligen Hydraulikzylinders 10 a, b ist der jeweilige Ausleger 3 und damit das Verteilergestänge 12 von einer Transportstellung in eine Arbeitsstellung überführbar. Dabei klappen die Hydraulikzylinder 10 a, b das Verteilergestänge 12 über vertikale Achsen in Arbeits-und Transportstellung. Um den Ausleger komplett von der Transport- in die Arbeitsstellung zu überführen, können weitere Vorrichtungen vorhanden sein, die in Fig. 1 und Fig. 2 nicht gezeigt sind. Beispielsweise kann jedem Gestängeabschnitt 4 ein weiterer Hydraulikzylinder zugeordnet sein, der den jeweiligen Gestängeabschnitt 4 ein- und/oder ausklappen kann.

Im Bereich der Hydraulikzylinder 10 a, b können nicht dargestellte Sensoren zur Erfassung der Arbeitsstellung des Verteilergestänges angebracht sein. Beispielhaft können die Sensoren als Potentiometer ausgebildet sein. Damit lässt sich die Position oder Arbeitsstellung der Kolbenstange des Hydraulikzylinders bestimmen. Ein entsprechendes Mess- oder Positionssignal kann über eine Datenleitung an eine nicht dargestellte Datenverarbeitungseinheit übermittelt werden, die basierend auf dem Messsignal den Klappvorgang der Gestängeabschnitte steuert. Die Datenverarbeitungseinheit ist hierbei derart konfiguriert, dass die Signale der Sensoren verarbeitet werden können und auf deren Basis ein Stellsignal für die Hydraulikzylinder generiert werden kann. Somit kann mittels der Potentiometer zur Positionserfassung der Ausklappvorgang des Verteilergestänges erfasst werden.

Wenn sich das Verteilergestänge in der Arbeitsstellung befindet, oder anders gesagt komplett ausgeklappt ist, können mittels des Steuer- und/oder Regelsystems auftretende Schwingungen am Verteilergestänge über die Hydraulikzylinder 10 a, b gedämpft und das Verteilergestänge 12 möglichst nahe an seiner Solllage gehalten werden. Die Solllage des Verteilergestänges 12 zeichnet sich, wie weiter oben beschrieben, dadurch aus, dass keine Relativbewegung zwischen dem das Verteilergestänge tragenden Nutzfahrzeug, und dem Verteilergestänge selbst, insbesondere in Fahrtrichtung, auftritt. Da dies eine idealisierte Lage ist, die sich auf das gesamte Verteilergestänge bezieht, ist es dabei möglich, dass sich einzelne Bereiche des Verteilergestänges bei aktiver Schwingungsdämpfung stärker bewegen, als dies ohne Schwingungsdämpfung der Fall wäre. Beispielsweise kann es an einem äußeren Ende des Verteilergestänges auf Grund der Elastizität der Ausleger zu Schwingungen kommen. Diese können mittels des Steuer- und/oder Regelsystems eliminiert beziehungsweise reduziert werden. Dies kann aber auf Grund der Betätigung der Hydraulikzylinder mit einer Bewegung des Verteilergestänges in der Nähe des Mittelteils verbunden sein. Mit anderen Worten kann die aktive Schwingungsdämpfung in geringfügig höheren Abweichungen von der Solllage in der Mitte des Verteilergestänges zu Gunsten deutlich geringerer Schwingungsamplituden am Ende eines Auslegers resultieren.

Das Steuer- und/oder Regelsystem umfasst hier nicht dargestellte Sensoren, welche derart ausgebildet sind, dass eine durch Schwingungen des Verteilergestänges 12 auftretende Druckänderung an den Hydraulikzylindern 10 a, b ermittelbar ist. Im Speziellen kann mittels der vorzugsweise als Drucksensoren ausgebildeten Sensoren 15 a, b ein Druckunterschied am jeweiligen Hydraulikzylinder 10 a, b gemessen werden. Basierend auf den Messsignalen der Drucksensoren kann die Datenverarbeitungseinheit eine dem jeweiligen Hydraulikzylinder 10 a, b zugeordnete nicht dargestellte hydraulische Ventileinheit ansteuern, wodurch ein Druckausgleich und damit eine Dämpfung der auftretenden Schwingungen erzielt werden kann.

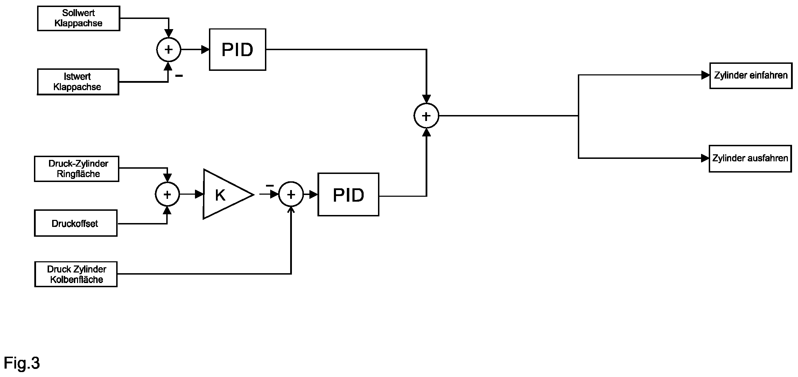

Fig. 3 zeigt ein Blockschaltbild einer möglichen Ausführung eines Steuer- und Auswerteprogramms einer Datenverarbeitungseinheit gemäß Fig. 1. Dabei sind Messsignale von mehreren Sensoren, welche am Verteilergestänge 12 gemäß Fig. 1 angeordnet sein können, als Eingangsgrößen an das Steuer- und Auswerteprogramm übermittelbar. Beispielhaft kann über ein Potentiometer der Istwert der Rotation um die Klappachse des zugehörigen Gestängeabschnitts 4 und/oder Auslegers 3, oder anders gesagt dessen Auslenkung aus der Ruhelage, bzw. die aktuelle Position ermittelt und mit einem Sollwert verglichen werden. Der Unterschied bzw. die Regelabweichung zwischen dem Istwert und dem Sollwert der Rotation um die Klappachse des Gestängeabschnitts 4 und/oder Auslegers 3 kann mittels eines PID-Reglers (proportional-integral-derivative - Reglers) angepasst werden.

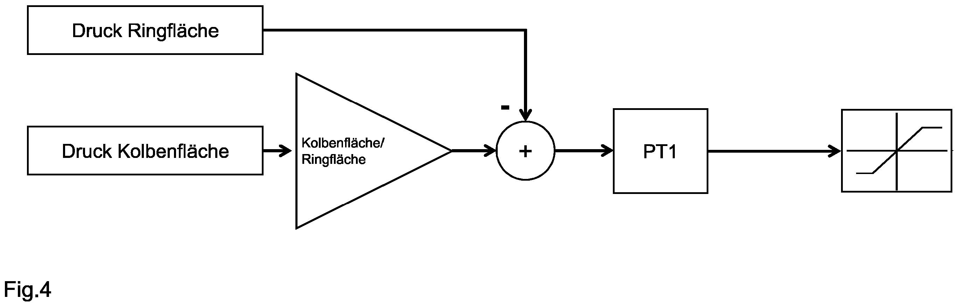

Weiterhin können über Drucksensoren 15 a, b der Druck an der Ringfläche und an der Kolbenfläche eines Hydraulikzylinders 10 a, b zur Überführung des Verteilergestänges 12 von einer Transport- in eine Arbeitsstellung und zur Dämpfung von am Verteilergestänge 12 auftretenden Schwingungen ermittelt werden. Anders gesagt kann mittels der Drucksensoren 15 eine auftretende Druckänderung an den Hydraulikzylindern 10 a, b ermittelt werden. Bei der Messung des Drucks an der Ringfläche kann ein Druckoffset, also ein Druckunterschied, welcher durch eine externe Kraft in der Solllage des Verteilergestänges 12 entstehen kann, durch dessen Verwendung als Eingangsgröße für das Steuer- und Auswertprogramm bereits kompensiert werden. Dieser Druckoffset, kann beispielsweise aufgrund einer auftretende Nickneigung des landwirtschaftlichen Geräts in oder entgegengesetzt zur Fahrtrichtung resultieren. Eine derartige Nickneigung des Geräts kann beispielhaft über entsprechend angeordnete Sensoren am Gerät oder auch über die Kartendaten des zu befahrenden Feldbodens berücksichtigt werden. Vorteilhafterweise kann der Druckoffset während des Betriebs des landwirtschaftlichen Geräts dynamisch bestimmt werden. Ein beispielhaftes Verfahren für eine solche Bestimmung des Druckoffsets wird weiter unten in Verbindung mit Fig. 4 beschrieben.

Vorteilhafterweise ist das Verhältnis K zwischen der Ring- und Kolbenfläche des Hydraulikzylinders 10 a, b zu berücksichtigen, um den Flächenunterschied der beiden Zylinderkammern des Hydraulikzylinders 10 a, b zu kompensieren. Beispielhaft kann an der Ringfläche des Hydraulikzylinders 10 a, b ein Druck von 90 bar gemessen werden. Die Kolbenfläche ist üblicherweise um einen Faktor K, beispielhaft um den Faktor 2, größer ausgebildet als die Ringfläche. Dementsprechend würde an der Kolbenfläche ein kleinerer Druck als an der Ringfläche, beispielhaft 45 bar, herrschen. Wenn die Differenz der beiden gemessenen und mit dem Verhältnis von Ring- und Kolbenfläche korrigierten Werte unter Berücksichtigung des Druckoffsets gleich Null ergeben sollte, wird von dem Steuer- und Auswerteprogramm kein Ausgangssignal für eine Anpassung des Hydraulikzylinders 10 a, b ausgegeben. Dann erfolgt die Anpassung des Hydraulikzylinders 10 a, b nur aufgrund der Regelung der Position des Gestängeabschnittes 4 und/oder Auslegers 3. Sollte die Differenz der korrigierten Drücke von Null abweichen, wirkt eine externe Kraft auf das Verteilergestänge 12 und das Steuer- und Auswerteprogramm kann mittels eines PID-Reglers ein Stellsignal für den Hydraulikzylinder 10 a, b ausgeben.

Zur Generierung des Stellsignals für den Hydraulikzylinder 10 a, b können die Signale des Potentiometers mit den Signalen der Drucksensoren 15 a, b zusammengeführt werden. Je nach Regelabweichung kann anhand der Kennlinie einer dem Hydraulikzylinder 10 a, b zugeordneten hydraulischen Ventileinheit ein Ausgangssignal für die Ventilöffnung zur Einstellung des Hydraulikdrucks am Hydraulikzylinder 10 a, b generiert werden. Dabei kann mittels der Kennlinie eine Umrechnung für den benötigten Ventilstrom zum Einklappen und Ausklappen bzw. zum Einfahren und Ausfahren des Zylinders ermittelt werden. Somit kann basierend auf den Signalen der Sensoren ein präzises Stellsignal für den Hydraulikzylinder 10 a, b zur Dämpfung für am Verteilergestänge 12 auftretenden Schwingungen generiert werden.

Fig. 4 illustriert ein Verfahren, mit dem ein Druckoffset während des Betriebs des landwirtschaftlichen Geräts bestimmt, beziehungsweise angepasst werden kann. Insbesondere kann dies der in Fig. 3 bezeichnete Druckoffset sein. Wie weiter oben beschrieben kann ein Druckunterschied zwischen den Drucksensoren 15 a, b bestimmt werden. Vorzugsweise geschieht dies unter Einbeziehung der Kolben- und Ringflächen der Hydraulikzylinder 10 a, b, wie oben beschrieben. Vorzugsweise wird eine Vielzahl von zeitlich aufeinanderfolgenden Druckunterschiedswerten durch die Datenverarbeitungseinheit derart verarbeitet, dass eine "quasi-statische" Druckunterschiedskomponente bestimmt werden kann, also eine Komponente die sich, wenn überhaupt, nur langsam verändert. Da in Solllage, wie oben dargelegt, keine Relativbewegung zwischen dem, das Verteilergestänge tragenden Nutzfahrzeug, und dem Verteilergestänge selbst, insbesondere in Fahrtrichtung, auftritt, also eine statische Situation vorliegt, entspricht die quasi-statische Druckkomponente dann dem gesuchten Druckoffset. In dem in Fig. 3 illustrierten Verfahren wird die quasi-statische Druckkomponente bestimmt, indem die Druckunterschiedswerte mittels eines Tiefpassfilters gefiltert werden. Der Tiefpassfilter ist hier als PT1-Glied implementiert. Das PT1-Glied hat dabei beispielsweise eine Zeitkonstante von 30 Sekunden. Die Zeitkonstante kann aber je nach Art der Anwendung auch größer oder kleiner sein.

Der Ausgangswert des Filters kann dann direkt als Druckoffset verwendet werden. Es ist auch möglich, mehrere Ausgangswerte zu mitteln, und den gemittelten Wert als Druckoffset zu verwenden. Der Druckoffset kann dann in die Steuerung und/oder Regelung wie sie beispielsweise in Fig. 3 illustriert ist, einfließen. In Fig. 4 ist weiterhin angedeutet, dass der Wert des Druckoffsets beschränkt werden kann. Beispielsweise kann der Wert aufgrund der Sensoren, die die Winkelstellung des Verteilergestänges erfassen, beschränkt werden. Dies kann erforderlich sein, da der gemessene Druckunterschied in einer Stellung des Verteilergestänges, die nicht der Arbeitsstellung entspricht, von dem gesuchten Druckoffset abweichen kann. Beispielsweise kann der weiter oben erwähnte Sollwert der Rotation um die Klappachse des Gestängeabschnitts 4 und/oder Auslegers 3 zwischen einem Ausleger und der Fahrtrichtung 90° betragen. Falls der Istwert von diesem Wert abweicht, so wird das System wie oben beschrieben den Unterschied zwischen dem Istwert und dem Sollwert mittels eines PID-Reglers (proportional-integral-derivative - Reglers) angepasst werden. Da während dieses Prozesses ein zusätzlicher Druck an dem Hydraulikzylinder auftreten kann, ist es möglich, dass ein falscher Druckoffset bestimmt wird, der dazu führen würde, dass die hydraulische Einrichtung der Anpassung der Rotation aktiv entgegenwirkt. Dies kann durch die beschriebene Beschränkung des Druckoffsets verhindert werden.

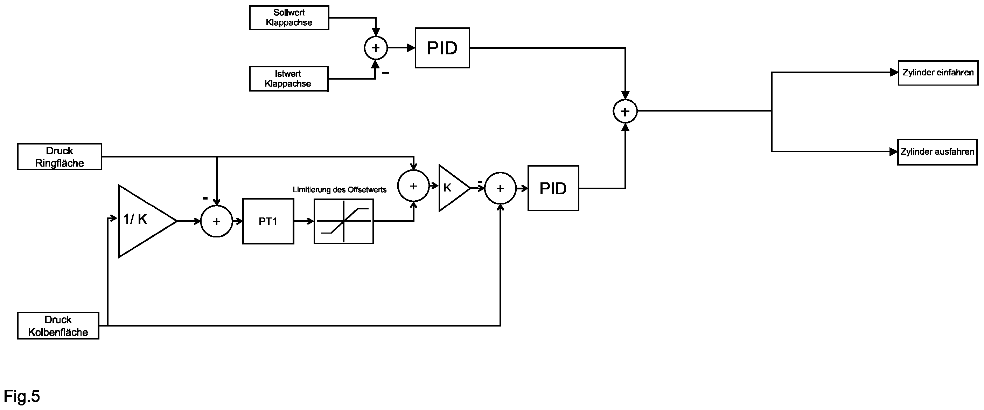

Fig. 5 zeigt eine mögliche Ausführung eines Steuer- und Auswerteprogramms. Im Vergleich zu der in Fig. 3 illustrierten Ausführung ist hier die mit Bezug auf Fig. 4 beschriebene Bestimmung des Druckoffsets direkt implementiert.

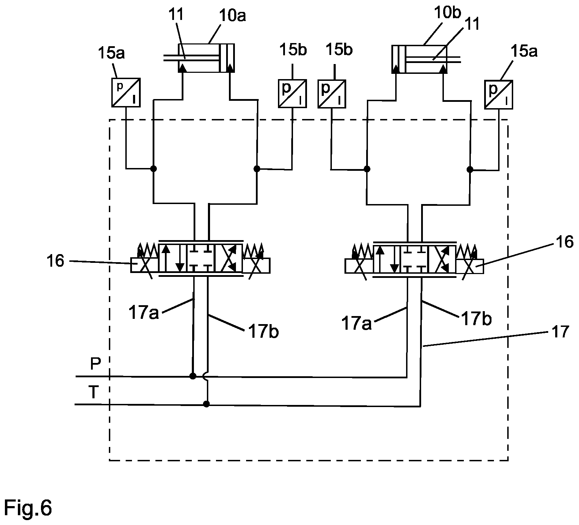

Die Fig. 6 bis 8 zeigen schematische Darstellungen eines Hydraulikschaltplans für ein Steuer-und/oder Regelsystem. Beispielhaft werden verschiedene Hydraulikschaltpläne gezeigt. Es wird darauf hingewiesen, dass weitere Komponenten vorhanden sein können, aber für die einfache schematische Anordnung in den Figuren nicht dargestellt sind.

Fig. 6 stellt einen Hydraulikschaltplan für eine hydraulische Einrichtung nach einem erfindungsgemäßen Ausführungsbeispiel für die Druckbeaufschlagung des rechten und linken Hydraulikzylinder 10 a, b gemäß Fig. 1 zur Überführung des Verteilergestänges von einer Transportstellung in eine Arbeitsstellung und zur Einstellung der Dämpfung von am Verteilergestänge auftretenden Schwingungen in Fahrtrichtung dar. Der rechte und linke Hydraulikzylinder 10 a, b sind beispielhaft als doppeltwirkende Hydraulikzylinder ausgebildet. Die Hydraulikzylinder 10 a, b sind mit dem Verteilergestänge gemäß Fig. 1 wie oben beschrieben verbunden. Über die Hydraulikleitung 17 sind die Hydraulikzylinder 10 a, b mit einem nicht dargestellten Hydraulikreservoir verbunden. Das Hydraulikreservoir enthält eine Hydraulikflüssigkeit, welche über die Hydraulikleitung 17 dem jeweiligen Hydraulikzylinder 10 a, b zugeführt werden kann. Dabei ist die Hydraulikleitung 17 durch eine Druck-Leitung, welche in den Figuren mit dem Bezugszeichen P gekennzeichnet ist, sowie eine Hydraulikreservoir-Leitung, welche mit dem Bezugszeichen T gekennzeichnet ist, gebildet.

Dem rechten und linken Hydraulikzylinder 10 a, b sind jeweils zwei Drucksensoren 15 a, b zugeordnet. Dabei sind die beiden Drucksensoren 15 a, b dem Hydraulikzylinder derart zugeordnet, dass sowohl ein Druck an einer Kolbenfläche, als auch an einer Ringfläche des Hydraulikzylinders 10 a, b ermittelt werden kann. Der Hydraulikzylinder 10 a, b weist an den zwei Seiten des Kolbens 11 zwei verschieden große Wirkflächen auf. Die der Kolbenstange zugewandte Wirkfläche des Hydraulikzylinders ist hierbei kleiner als die der Kolbenstange abgewandten Wirkfläche. Demnach misst der Drucksensor 15a an der Ringfläche einen unterschiedlichen, insbesondere größeren, Druck als der Drucksensor 15b an der Kolbenfläche.

Die Drucksensoren 15 a, b sind zur Messung des Drucks an der Ring- und Kolbenfläche des Hydraulikzylinders 10 a, b an eine Zuführleitung 17a und eine Abführleitung 17b des jeweiligen Hydraulikzylinders 10a, b angeschlossen. Die Zuführleitung 17a der Hydraulikleitung 17 beschreibt im Rahmen der Anmeldung jenen Abschnitt der Hydraulikleitung 17, welcher das nicht dargestellte Hydraulikreservoir mit der Ringfläche des Hydraulikzylinders 10 a, b verbindet. Im Gegensatz dazu beschreibt im Rahmen der Anmeldung die Abführleitung 17b der Hydraulikleitung 17 jenen Abschnitt der Hydraulikleitung 17, welcher das Hydraulikreservoir mit der Kolbenfläche des Hydraulikzylinders 10 a, b verbindet.

Die Drucksensoren 15 a, b sind hierbei beispielhaft als Druckmessumformer ausgebildet. Der Druckmessumformer stellt generell einen elektrischen Messumformer zur Messung des vorhandenen Drucks im Hydraulikzylinder 10 a, b dar. Somit ist mittels des Drucksensors eine durch Schwingungen des Verteilergestänges auftretende Druckänderung ermittelbar. Beispielhaft kann mittels der Druckmessumformer 15 a, b ein Druckunterschied am Hydraulikzylinder 10 a, b und damit an der hydraulischen Einrichtung gemessen werden.

Weiterhin ist jedem Hydraulikzylinder 10 a, b eine hydraulische Ventileinheit zur Regelung des Hydraulikdrucks zugeordnet. Dabei ist die hydraulische Ventileinheit in der Hydraulikleitung 17 angeordnet und beispielhaft als Proportionalventil 16, oder anders gesagt als Mehrwegeventil ausgebildet. Die dem jeweiligen Hydraulikzylinder 10 a, b zugeordneten Drucksensoren 15 a, b sind an der Zuführleitung 17a und Abführleitung 17b zwischen dem Hydraulikzylinder 10 a, b und dem zugehörigen Proportionalventil 16 angeordnet. Das Proportionalventil 16 ist hierbei im Speziellen als 4/3-Wegeventil ausgebildet. Das Proportionalventil 16 kann von einer nicht dargestellten Datenverarbeitungseinheit angesteuert und eingestellt werden. Hierzu ist das Proportionalventil 16 mit der Datenverarbeitungseinheit, beispielsweise über Kabelleitungen oder kabellos verbunden. Die Datenverarbeitungseinheit ist weiterhin mit den Drucksensoren 15 a, b verbunden. Basierend auf den von den Drucksensoren 15 a, b ermittelten Signalen kann die Datenverarbeitungseinheit das Proportionalventil 16 ansteuern. Im Speziellen kann das Proportionalventil 16, welches dem jeweiligen Hydraulikzylinder 10 a, b zugeordnet ist, zum Druckausgleich basierend auf den von den Drucksensoren 15 a, b ermittelten Werten angesteuert werden. In der Ruhestellung des Proportionalventils 16, ist das Ventil vorzugsweise geschlossen, oder anders gesagt in einer mittigen Stellung. Über die Datenverarbeitungseinheit kann das Ventil nach links oder rechts ausgelenkt werden. Durch die Auslenkung des Ventils, kann der Druck an der Ringfläche, bzw. der Kolbenfläche des Hydraulikzylinders mittels des Proportionalventils erhöht bzw. gesenkt werden, oder anders gesagt, der Kolben des Hydraulikzylinders 10 a, b ein- oder ausgefahren werden.

Dabei bilden die Datenverarbeitungseinheit, die Drucksensoren 15 a, b und die hydraulische Ventileinheit 16 der hydraulischen Einrichtung eine Einheit. Somit kann basierend auf den von den Drucksensoren 15 a, b ermittelten Signalen mittels der Datenverarbeitungseinheit und den Proportionalventilen zum Druckausgleich in den Hydraulikzylindern 10 a, b eine Dämpfung von am Verteilergestänge auftretenden Schwingungen erfolgen.

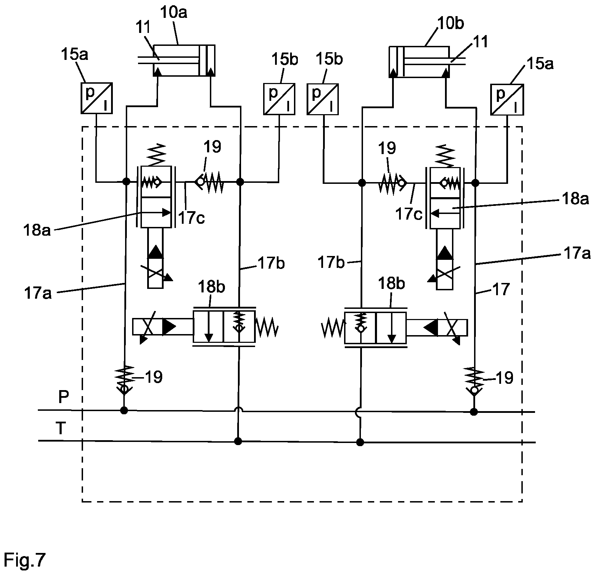

Fig. 7 zeigt eine weitere schematische Darstellung eines Hydraulikschaltplans für ein erfindungsgemäßes Steuer- und/oder Regelsystem gemäß einem weiteren Ausführungsbeispiel. Wie mit Bezug auf Fig. 6 beschrieben sind der rechte und linke Hydraulikzylinder 10 a, b zum Klappen des rechten und linksseitigen Auslegers 3 des Verteilergestänges 12 gemäß Fig. 2 und zur Dämpfung von am Verteilergestänge 12 auftretenden Schwingungen beispielhaft als doppeltwirkende Hydraulikzylinder 10 a, b ausgebildet und mit einer Hydraulikleitung 17 verbunden. Zur Messung des Hydraulikdrucks an der Ring- und der Kolbenfläche des jeweiligen Hydraulikzylinders 10 a, b sind jedem Hydraulikzylinder 10 a, b zwei Drucksensoren 15 a, b wie mit Bezug auf Fig. 6 beschrieben zugeordnet.

In der jeweiligen Zuführleitung 17a der Hydraulikleitung 17 in den jeweiligen Hydraulikzylinder 10 a, b kann zwischen dem nicht dargestellten Hydraulikreservoir und dem jeweiligen Hydraulikzylinder 10 a, b ein Sperrventil 19 angeordnet sein. Das Sperrventil 19 kann als Rückschlagventil ausgebildet und mit einer Feder belastet sein. Mittels des Sperrventils 19 kann der Durchfluss in einer Richtung gesperrt und in entgegengesetzter Richtung freigegeben werden. Demnach kann an der Ringfläche des jeweiligen Hydraulikzylinders 10 a, b kontinuierlich Hydraulikdruck anliegen.

In der jeweiligen Abführleitung 17b des jeweiligen Hydraulikzylinders 10 a, b ist ein Mehrwegeventil 18b angeordnet. Die Druckmessung des Hydraulikdrucks mit dem Drucksensor 15b erfolgt dabei zwischen dem Hydraulikzylinder 10 a, b und dem Mehrwegeventil 18b. Das Mehrwegeventil 18b kann dabei elektronisch über die Datenverarbeitungseinheit zum Druckausgleich basierend auf den Messsignalen des Drucksensors 15 a, b gesteuert werden.

Die Zuführleitung 17a und die Abführleitung 17b sind mittels einer zusätzlichen Zwischenleitung 17c verbunden. In der Zwischenleitung 17c ist ein weiteres Mehrwegeventil 18a angeordnet. Das Mehrwegeventil 18a kann dabei elektronisch mittels der Datenverarbeitungseinheit gesteuert werden. Weiterhin kann ein Sperrventil 19 auf der der Abführleitung 17b zugewandten Seite des Mehrwegeventils 18a angeordnet sein.

Die beiden Mehrwegeventile 18 a dienen der Verbindung zwischen Ring- und Kolbenfläche des jeweiligen Hydraulikzylinders 10 a, b. Zum Ausfahren des Hydraulikzylinders 10 a, b werden die Ring- und Kolbenfläche miteinander verbunden, bzw. fährt der Hydraulikzylinder über die im Verhältnis größere Fläche der Kolbenfläche aus. Anders gesagt kann bei einer Betätigung des jeweiligen Mehrwegeventils 18 a durch die Datenverarbeitungseinheit, der jeweilige Hydraulikzylinder 10 a, b ausfahren.

Das Einfahren des jeweiligen Hydraulikzylinders 10 a, b kann mittels des dem jeweiligen Hydraulikzylinder 10 a, b zugeordneten Mehrwegeventils 18 b erreicht werden. Bei einer Betätigung des Mehrwegeventils 18b durch die Datenverarbeitungseinheit, kann auf der Kolbenseite des Hydraulikzylinders 10 a, b Hydraulikflüssigkeit abgelassen werden. Aufgrund der kontinuierlichen Versorgung der Ringfläche des Hydraulikzylinders 10 a, b mit Hydraulikdruck, kann der Hydraulikzylinder 10 a, b demnach einfahren.

Damit beim Ein- und Ausfahren des Hydraulikzylinders 10 a, b identische Kräfte erzeugt werden können, sollte das Verhältnis zwischen Ring- und Kolbenfläche idealerweise 1:2 betragen. Somit kann basierend auf den von den Drucksensoren 15 a, b gemessenen Werten, welche von der Datenverarbeitungseinheit ausgewertet und verarbeitet werden, über das elektronisch gesteuerte Ein- und Ausklappen der beiden Mehrwegeventile 18 a, b, das Ein- und Ausfahren des Hydraulikzylinders 10 a, b effizient gesteuert werden.

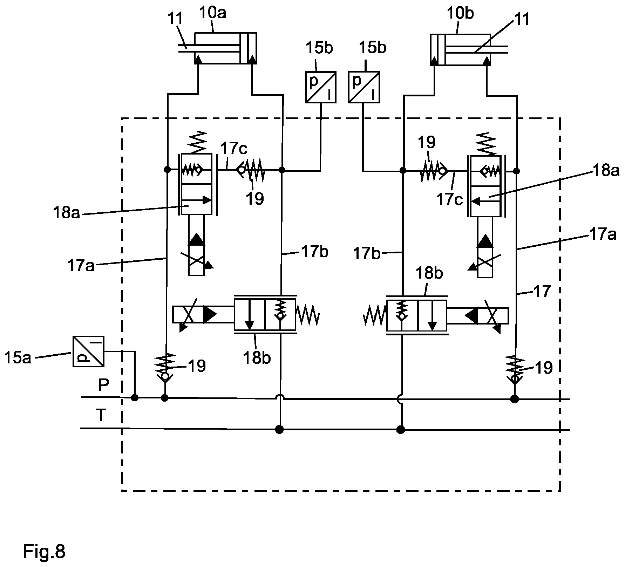

Fig. 8 zeigt eine weitere schematische Darstellung eines Hydraulikschaltplans für ein erfindungsgemäßes Steuer- und/oder Regelsystem gemäß einem dritten Ausführungsbeispiel. Der Grundaufbau und die Funktionsweise der einzelnen Komponenten des Hydraulikschaltplans ist wie mit Bezug auf Fig. 7 beschrieben. Im Unterschied zu Fig. 6 ist in der Hydraulikleitung 17 nur ein einziger Drucksensor 15a zur Messung des Drucks an der Ringfläche beider Hydraulikzylinder 10 a, b angeordnet. Demnach ist der einzige Drucksensor 15a in der Hydraulikleitung 17 zwischen dem nicht dargestellten Hydraulikreservoir und der jeweiligen Zuführleitung 17a des jeweiligen Hydraulikzylinders 10 a, b angeordnet. Mit anderen Worten ist der einzige Drucksensor 15a an die Druck-Leitung der Hydraulikleitung 17, welche in den Figuren mit dem Bezugszeichen P gekennzeichnet ist und die Zuführleitung 17 a umfasst, angeschlossen. Sollte im Betrieb der Fall eintreten, dass sich der Druck auf der Ringseite des Hydraulikzylinders 10 a, b erhöht, wird die Hydraulikflüssigkeit innerhalb der Zuführleitung 17a gegen das Sperrventil 19 gedrückt. Anders gesagt, stützt sich die Hydraulikflüssigkeitssäule auf dem Sperrventil 19 ab und der tatsächliche Druck auf der Ringfläche des Hydraulikzylinders 10 a, b weist einen höheren Wert auf, als der vom Drucksensor 15 a gemessene Druck. Folglich kann das Mehrwegeventil 18 a oder das Mehrwegeventil 18 b zum Druckausgleich geöffnet werden. Hierbei findet ein Angleichen der Drücke in der Druckleitung, und der Ringfläche des Hydraulikzylinders 10 a, b statt, da in beiden Fällen Hydraulikflüssigkeit aus der Druckleitung nachfließen kann.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind

## Patentansprüche

1. Steuer- und/oder Regelsystem für ein landwirtschaftliches Gerät mit einem Verteilergestänge (12) zum Ausbringen von Material, wie Düngemittel, Pflanzenschutzmittel oder Saatgut, welches sich quer zur Fahrtrichtung erstreckt und ein Mittelteil (2) und zwei mit dem Mittelteil (2) verbundene seitliche Ausleger (3) mit mehreren zueinander in Transportstellung einklappbaren und in Arbeitsstellung ausklappbaren, durch Gelenke verbundene Gestängeabschnitte (4) aufweist, wobei jedem Ausleger (3) wenigstens eine hydraulische Einrichtung zugeordnet ist, wobei die jeweilige hydraulische Einrichtung zur Dämpfung von am Verteilergestänge (12) in horizontaler und/oder vertikaler Richtung auftretenden Schwingungen ansteuerbar ist, und wobei die jeweilige hydraulische Einrichtung einen Hydraulikzylinder (10 a,b), insbesondere einen doppeltwirkenden Hydraulikzylinder, umfasst, wobei das Steuer-und/oder Regelsystem umfasst:
eine Sensoreinrichtung, die dazu konfiguriert ist, eine durch Schwingungen in horizontaler und/oder vertikaler Richtung des Verteilergestänges (12) auftretende Druckänderung an der jeweiligen hydraulischen Einrichtung zu erfassen; und
eine Datenverarbeitungseinheit, die dazu konfiguriert ist, Signale der Sensoreinrichtung zu verarbeiten und auf deren Basis ein Stellsignal für die jeweilige hydraulische Einrichtung zu generieren,
wobei das Stellsignal unter Berücksichtigung eines Druckoffsets generiert wird, der einem Druckunterschied zwischen den Druckkammern des jeweiligen Hydraulikzylinders (10a,b) in einer Solllage des Verteilergestänges entspricht, und
wobei der Druckoffset basierend auf Signalen der Sensoreinrichtung bestimmt wird.

2. Steuer- und/oder Regelsystem gemäß Anspruch 1, wobei die Signale der Sensoreinrichtung zur Bestimmung des Druckoffsets verarbeitet werden, indem sie mittels eines Tiefpassfilters gefiltert werden.

3. Steuer- und/oder Regelsystem gemäß einem der vorhergehenden Ansprüche, wobei die Sensoreinrichtung einen ersten Sensor (15a) und einen zweiten Sensor (15b) umfasst,
wobei der erste Sensor (15a) dazu konfiguriert ist, einen ersten Druck zu erfassen, der einem Druck auf der Seite einer Ringfläche des Hydraulikzylinders (10 a,b) einer jeweiligen hydraulischen Einrichtung zugeordnet ist, und
wobei der zweite Sensor (15b) dazu konfiguriert ist, einen zweiten Druck zu erfassen, der einem Druck auf der Seite einer Kolbenfläche des Hydraulikzylinders (10 a, b) der jeweiligen hydraulischen Einrichtung zugeordnet ist.

4. Steuer- und/oder Regelsystem gemäß Anspruch 3, wobei die Datenverarbeitungseinheit dazu konfiguriert ist, die Signale des ersten Sensors (15a) und des zweiten Sensors (15b), insbesondere unter Berücksichtigung des Verhältnisses der Ringfläche und der Kolbenfläche des Hydraulikzylinders (10 a,b), zu verarbeiten, um das Stellsignal für die jeweilige hydraulische Einrichtung zu generieren.

5. Steuer- und/oder Regelsystem gemäß Anspruch 4, wobei die Datenverarbeitungseinheit dazu konfiguriert ist
eine Vielzahl von Druckunterschiedswerten basierend auf den Signalen des ersten Sensors (15a) und des zweiten Sensors (15b) unter Berücksichtigung des Verhältnisses der Ringfläche und der Kolbenfläche des Hydraulikzylinders (10 a,b) zu bestimmen,
einen Filter, insbesondere einen Tiefpassfilter, auf die Vielzahl von Druckunterschiedswerten anzuwenden, und
den Druckoffset basierend auf den gefilterten Druckunterschiedswerten zu bestimmen.

6. Steuer- und/oder Regelsystem gemäß einem der vorhergehenden Ansprüche, wobei die jeweilige hydraulische Einrichtung weiterhin umfasst:
eine Hydraulikleitung (17), welche zur Zufuhr von Hydraulikflüssigkeit an den Hydraulikzylinder angeschlossen ist; und
wenigstens eine hydraulische Ventileinheit (16) zur Regelung des Hydraulikdrucks, wobei die Ventileinheit (16) über ein Stellsignal der Datenverarbeitungseinheit steuerbar ist.

7. Steuer- und/oder Regelsystem gemäß Anspruch 6, wobei die wenigstens eine hydraulische Ventileinheit (16) durch ein Proportionalventil gebildet wird.

8. Steuer- und/oder Regelsystem gemäß einem der Ansprüche 3 bis 7, wobei der erste Sensor (15a) dazu konfiguriert ist, einen Druck zu erfassen, der einem gemeinsamen Druck auf der Seite der Ringflächen aller Hydraulikzylinder (10 a,b) des Systems zugeordnet ist.

9. Steuer- und/oder Regelsystem gemäß einem der vorhergehenden Ansprüche, weiterhin umfassend weitere Sensoren am Verteilergestänge (12), die dazu konfiguriert sind, eine Rotation um eine Klappachse und/oder eine Position eines Gestängeabschnitts (4) und/oder Auslegers (3) zu bestimmen, wobei die Datenverarbeitungseinheit dazu konfiguriert ist, das Stellsignal basierend auf der bestimmten Rotation und/oder Position zu generieren.

10. Steuer- und/oder Regelsystem gemäß einem der vorhergehenden Ansprüche, wobei die hydraulische Einrichtung das Verteilergestänge (12) von einer Transport- in eine Arbeitsstellung und umgekehrt überführen kann.

11. Landwirtschaftliches Gerät zum Ausbringen von Material, wie Düngemittel, Pflanzenschutzmittel oder Saatgut, umfassend ein Steuer- und/oder Regelsystem gemäß einem der vorhergehenden Ansprüche.

12. Verfahren zur Steuerung und/oder Regelung eines landwirtschaftlichen Geräts mit einem Verteilergestänge (12) zum Ausbringen von Material, wie Düngemittel, Pflanzenschutzmittel oder Saatgut, welches sich quer zur Fahrtrichtung erstreckt und ein Mittelteil (2) und zwei mit dem Mittelteil (2) verbundene seitliche Ausleger (3) mit mehreren zueinander in Transportstellung einklappbaren und in Arbeitsstellung ausklappbaren, durch Gelenke verbundene Gestängeabschnitte (4) aufweist, wobei jedem Ausleger (3) wenigstens eine hydraulische Einrichtung zugeordnet ist, wobei die jeweilige hydraulische Einrichtung zur Dämpfung von am Verteilergestänge in horizontaler und/oder vertikaler Richtung auftretenden Schwingungen ansteuerbar ist, und wobei die jeweilige hydraulische Einrichtung einen Hydraulikzylinder (10 a,b), insbesondere einen doppeltwirkenden Hydraulikzylinder umfasst, wobei das Verfahren die folgenden Schritte umfasst:
Erfassen einer durch Schwingungen in horizontaler und/oder vertikaler Richtung des Verteilergestänges (12) auftretenden Druckänderung an der jeweiligen hydraulischen Einrichtung durch eine Sensoreinrichtung; und
Generieren, auf Basis der erfassten Druckänderung, eines Stellsignals für die jeweilige hydraulische Einrichtung, wobei das Stellsignal unter Berücksichtigung eines Druckoffsets generiert wird, der einem Druckunterschied zwischen einer Ringfläche und einer Kolbenfläche des Hydraulikzylinders (10 a,b) in einer Solllage des Verteilergestänges entspricht,
wobei der Druckoffset basierend auf Signalen der Sensoreinrichtung bestimmt wird.

13. Verfahren gemäß Anspruch 12, wobei die Signale der Sensoreinrichtung verarbeitet werden, indem sie mittels eines Tiefpassfilters gefiltert werden.

14. Verfahren gemäß Anspruch 12 oder 13, weiterhin umfassend die Schritte:
Erfassen eines ersten Drucks, der einem Druck auf der Ringfläche des Hydraulikzylinders (10 a,b) zugeordnet ist;
Erfassen eines zweiten Drucks, der einem Druck auf der Kolbenfläche des Hydraulikzylinders (10a ,b) zugeordnet ist;
Verarbeiten des ersten Drucks und des zweiten Drucks unter Berücksichtigung des Verhältnisses der Ringfläche und der Kolbenfläche des Hydraulikzylinders (10 a,b);
Generieren des Stellsignals für die jeweilige hydraulische Einrichtung auf Grundlage der verarbeiteten Druckwerte.

15. Verfahren gemäß Anspruch 14, weiterhin umfassend die Schritte:
Bestimmen einer Vielzahl von Druckunterschiedswerten basierend auf dem ersten Druck und dem zweiten Druck unter Berücksichtigung des Verhältnisses der Ringfläche und der Kolbenfläche des Hydraulikzylinders (10 a,b);
Anwenden eines Filters, insbesondere eines Tiefpassfilters, auf die Vielzahl von Druckunterschiedswerten; und
Bestimmen des Druckoffsets basierend auf der gefilterten Vielzahl von Druckunterschiedswerte.

16. Verfahren gemäß einem der Ansprüche 14 oder 15, wobei der erste Druck einem gemeinsamen Druck auf den Ringflächen aller Hydraulikzylinder des Hydraulikzylinders (10 a, b) des Systems zugeordnet ist.

17. Verfahren gemäß einem der Ansprüche 12 bis 16, weiterhin umfassend die Schritte:
Bestimmen einer Rotation um eine Klappachse und/oder einer Position eines Gestängeabschnitts und/oder Auslegers;
Generieren des Stellsignals basierend auf der bestimmten Rotation und/oder Position.

## Claims

1. Open-loop and/or closed-loop control system for an agricultural apparatus having a distributor linkage (12) for spreading material, such as fertilizer, plant protection agent or seed, which linkage extends transversely to the direction of travel and has a central part (2) and two lateral arms (3) connected to the central part (2) with a plurality of linkage portions (4) which can be folded in toward one another in the transport position and folded out in the working position and are connected by joints, wherein each arm (3) is assigned at least one hydraulic device, wherein each hydraulic device can be controlled to dampen vibrations occurring on the distributor linkage (12) in the horizontal and/or vertical direction, and wherein each hydraulic device comprises a hydraulic cylinder (10 a,b), in particular a double-acting hydraulic cylinder, wherein the open-loop and/or closed-loop control system comprises:
a sensor device configured to detect a pressure change occurring at the relevant hydraulic device caused by vibrations in the horizontal and/or vertical direction of the distributor linkage (12); and
a data processing unit configured to process signals from the sensor device and to generate a control signal for the relevant hydraulic device on the basis of these signals,
wherein the control signal is generated taking into account a pressure offset which corresponds to a pressure difference between the pressure chambers of the relevant hydraulic cylinder (10a,b) in a target position of the distributor linkage, and
wherein the pressure offset is determined based on signals from the sensor device.

2. Open-loop and/or closed-loop control system according to claim 1, wherein the signals from the sensor device for determining the pressure offset are processed by being filtered by means of a low-pass filter.

3. Open-loop and/or closed-loop control system according to either of the preceding claims, wherein the sensor device comprises a first sensor (15a) and a second sensor (15b),
wherein the first sensor (15a) is configured to detect a first pressure associated with a pressure on the side of an annular surface of the hydraulic cylinder (10 a,b) of a hydraulic device, and
wherein the second sensor (15b) is configured to detect a second pressure associated with a pressure on the side of a piston surface of the hydraulic cylinder (10 a, b) of the relevant hydraulic device.

4. Open-loop and/or closed-loop control system according to claim 3, wherein the data processing unit is configured to process the signals from the first sensor (15a) and the second sensor (15b), in particular taking into account the ratio of the annular surface and the piston surface of the hydraulic cylinder (10 a,b), in order to generate the control signal for the relevant hydraulic device.

5. Open-loop and/or closed-loop control system according to claim 4, wherein the data processing unit is configured
to determine a plurality of pressure difference values based on the signals from the first sensor (15a) and the second sensor (15b) taking into account the ratio of the annular surface and the piston surface of the hydraulic cylinder (10 a,b),
to apply a filter, in particular a low-pass filter, to the plurality of pressure difference values, and
to determine the pressure offset based on the filtered pressure difference values.

6. Open-loop and/or closed-loop control system according to any of the preceding claims, wherein each hydraulic device further comprises:
a hydraulic line (17) which is connected to the hydraulic cylinder for supplying hydraulic fluid; and
at least one hydraulic valve unit (16) for controlling the hydraulic pressure, wherein the valve unit (16) is controllable via a control signal from the data processing unit.

7. Open-loop and/or closed-loop control system according to claim 6, wherein the at least one hydraulic valve unit (16) is formed by a proportional valve.

8. Open-loop and/or closed-loop control system according to any of claims 3 to 7, wherein the first sensor (15a) is configured to detect a pressure associated with a common pressure on the side of the annular surfaces of all hydraulic cylinders (10 a,b) of the system.

9. Open-loop and/or closed-loop control system according to any of the preceding claims, further comprising further sensors on the distributor linkage (12) which are configured to determine a rotation about a folding axis and/or a position of a linkage portion (4) and/or arm (3), wherein the data processing unit is configured to generate the control signal based on the determined rotation and/or position.

10. Open-loop and/or closed-loop control system according to any of the preceding claims, wherein the hydraulic device can transfer the distributor linkage (12) from a transport position to a working position and vice versa.

11. Agricultural apparatus for spreading material, such as fertilizers, plant protection agents or seed, having an open-loop and/or closed-loop control system according to any of the preceding claims.

12. Method for open-loop and/or closed-loop control of an agricultural apparatus having a distributor linkage (12) for spreading material, such as fertilizer, plant protection agent or seed, which linkage extends transversely to the direction of travel and has a central part (2) and two lateral arms (3) connected to the central part (2) with a plurality of linkage portions (4) which can be folded in toward one another in the transport position and folded out in the working position and are connected by joints, wherein each arm (3) is assigned at least one hydraulic device, wherein each hydraulic device can be controlled to dampen vibrations occurring on the distributor linkage in the horizontal and/or vertical direction, and wherein each hydraulic device comprises a hydraulic cylinder (10 a,b), in particular a double-acting hydraulic cylinder, wherein the method comprises the following steps:
detecting a pressure change occurring at the relevant hydraulic device caused by vibrations in the horizontal and/or vertical direction of the distributor linkage (12) by means of a sensor device; and
generating, on the basis of the detected pressure change, a control signal for the relevant hydraulic device, wherein the control signal is generated taking into account a pressure offset which corresponds to a pressure difference between an annular surface and a piston surface of the hydraulic cylinder (10 a,b) in a target position of the distributor linkage,
wherein the pressure offset is determined based on signals from the sensor device.

13. Method according to claim 12, wherein the signals from the sensor device are processed by being filtered by means of a low-pass filter.

14. Method according to claim 12 or 13, further comprising the steps of:
detecting a first pressure associated with a pressure on the annular surface of the hydraulic cylinder (10 a,b);
detecting a second pressure associated with a pressure on the piston surface of the hydraulic cylinder (10 a,b);
processing the first pressure and the second pressure taking into account the ratio of the annular surface and the piston surface of the hydraulic cylinder (10 a,b);
generating the control signal for the relevant hydraulic device based on the processed pressure values.

15. Method according to claim 14, further comprising the steps of:
determining a plurality of pressure difference values based on the first pressure and the second pressure taking into account the ratio of the annular surface and the piston surface of the hydraulic cylinder (10 a,b);
applying a filter, in particular a low-pass filter, to the plurality of pressure difference values; and
determining the pressure offset based on the filtered plurality of pressure difference values.

16. Method according to one of claims 14 or 15, wherein the first pressure is associated with a common pressure on the annular surfaces of all hydraulic cylinders of the hydraulic cylinder (10 a,b) of the system.

17. Method according to any of claims 12 to 16, further comprising the steps of:
determining a rotation about a folding axis and/or a position of a linkage portion and/or arm;
generating the control signal based on the determined rotation and/or position.

## Revendications

1. Système de commande et/ou de régulation pour un appareil agricole comportant une rampe de distribution (12) pour l'épandage de matière, telle que de l'engrais, des agents phytosanitaires ou des semences, et qui s'étend transversalement à la direction de déplacement et présente une partie centrale (2) et deux bras (3) latéraux reliés à la partie centrale (2) comportant plusieurs sections de rampe (4) reliées par des articulations, pouvant être repliées les unes par rapport aux autres en position de transport et déployées en position de travail, dans lequel au moins un dispositif hydraulique est associé à chaque bras (3), dans lequel le dispositif hydraulique respectif peut être commandé pour amortir des oscillations apparaissant sur la rampe de distribution (12) dans le sens horizontal et/ou vertical, et dans lequel le dispositif hydraulique respectif comprend un vérin hydraulique (10a,b), en particulier un vérin hydraulique à double effet, dans lequel le système de commande et/ou de régulation comprend :
un dispositif de détection configuré pour détecter une variation de pression au niveau du dispositif hydraulique respectif apparaissant suite à des oscillations dans le sens horizontal et/ou vertical de la rampe de distribution (12) ; et
une unité de traitement de données configurée pour traiter des signaux du dispositif de détection et pour générer sur la base de ceux-ci un signal de réglage pour le dispositif hydraulique respectif,
dans lequel le signal de réglage est généré en prenant en compte un décalage de pression qui correspond à une différence de pression entre les chambres de pression du vérin hydraulique (10a,b) respectif dans une position de consigne de la rampe de distribution, et
dans lequel le décalage de pression est déterminé sur la base de signaux du dispositif de détection.

2. Système de commande et/ou de régulation selon la revendication 1, dans lequel les signaux du dispositif de détection sont traités pour permettre de déterminer le décalage de pression en les filtrant au moyen d'un filtre passe-bas.

3. Système de commande et/ou de régulation selon l'une des revendications précédentes, dans lequel le dispositif de détection comprend un premier capteur (15a) et un second capteur (15b),
dans lequel le premier capteur (15a) est configuré pour détecter une première pression associée à une pression du côté d'une surface annulaire du vérin hydraulique (10a,b) d'un dispositif hydraulique respectif, et
dans lequel le second capteur (15b) est configuré pour détecter une seconde pression associée à une pression du côté d'une surface de piston du vérin hydraulique (10a,b) du dispositif hydraulique respectif.

4. Système de commande et/ou de régulation selon la revendication 3, dans lequel l'unité de traitement de données est configurée pour traiter les signaux du premier capteur (15a) et du second capteur (15b), en particulier en prenant en compte le rapport entre la surface annulaire et la surface de piston du vérin hydraulique (10a,b) afin de générer le signal de réglage pour le dispositif hydraulique respectif.

5. Système de commande et/ou de régulation selon la revendication 4, dans lequel l'unité de traitement de données est configurée pour
déterminer une pluralité de valeurs de différence de pression basées sur les signaux du premier capteur (15a) et du second capteur (15b) en prenant en compte le rapport entre la surface annulaire et la surface de piston du vérin hydraulique (10a,b),
appliquer un filtre, en particulier un filtre passe-bas, à la pluralité de valeurs de différence de pression, et
déterminer le décalage de pression sur la base des valeurs de différence de pression filtrées.

6. Système de commande et/ou de régulation selon l'une des revendications précédentes, dans lequel le dispositif hydraulique respectif comprend en outre :
une conduite hydraulique (17) raccordée au vérin hydraulique pour l'alimentation en fluide hydraulique ; et
au moins une unité formant soupape (16) hydraulique pour la régulation de la pression hydraulique, dans lequel l'unité formant soupape (16) peut être commandée par l'intermédiaire d'un signal de réglage de l'unité de traitement de données.

7. Système de commande et/ou de régulation selon la revendication 6, dans lequel l'au moins une unité formant soupape (16) hydraulique est formée par une soupape proportionnelle.

8. Système de commande et/ou de régulation selon l'une des revendications 3 à 7, dans lequel le premier capteur (15a) est configuré pour détecter une pression associée à une pression commune du côté des surfaces annulaires de tous les vérins hydrauliques (10a,b) du système.

9. Système de commande et/ou de régulation selon l'une des revendications précédentes, comprenant en outre d'autres capteurs sur la rampe de distribution (12) configurés pour déterminer une rotation autour d'un axe de pliage et/ou une position d'une section de rampe (4) et/ou d'un bras (3), dans lequel l'unité de traitement de données est configurée pour générer le signal de commande sur la base de la rotation et/ou de la position déterminées.

10. Système de commande et/ou de régulation selon l'une des revendications précédentes, dans lequel le dispositif hydraulique peut faire passer la rampe de distribution (12) d'une position de transport à une position de travail et inversement.

11. Appareil agricole permettant d'épandre de la matière, telle que de l'engrais, des agents phytosanitaires ou des semences, comprenant un système de commande et/ou de réglage selon l'une des revendications précédentes.

12. Procédé permettant la commande et/ou la régulation d'un appareil agricole comportant une rampe de distribution (12) pour l'épandage de matière, telle que de l'engrais, des agents phytosanitaires ou des semences, et qui s'étend transversalement à la direction de déplacement et présente une partie centrale (2) et deux bras (3) latéraux reliés à la partie centrale (2) comportant plusieurs sections de rampe (4) reliées par des articulations, pouvant être repliées les unes par rapport aux autres en position de transport et déployées en position de travail, dans lequel au moins un dispositif hydraulique est associé à chaque bras (3), dans lequel le dispositif hydraulique respectif peut être commandé pour amortir des oscillations apparaissant sur la rampe de distribution dans le sens horizontal et/ou vertical, et dans lequel le dispositif hydraulique respectif comprend un vérin hydraulique (10a,b), en particulier un vérin hydraulique à double effet, dans lequel le procédé comprend les étapes suivantes :
détection, par un dispositif de détection, d'une variation de pression sur le dispositif hydraulique respectif, apparaissant suite à des oscillations dans le sens horizontal et/ou vertical de la rampe de distribution (12) ; et
générer, sur la base de la variation de pression détectée, un signal de réglage pour le dispositif hydraulique respectif, dans lequel le signal de réglage est généré en prenant en compte un décalage de pression qui correspond à une différence de pression entre une surface annulaire et une surface de piston du vérin hydraulique (10a,b) dans une position de consigne de la rampe de distribution,
dans lequel le décalage de pression est déterminé sur la base de signaux du dispositif de détection.

13. Procédé selon la revendication 12, dans lequel les signaux du dispositif de détection sont traités en les filtrant au moyen d'un filtre passe-bas.

14. Procédé selon l'une des revendications 12 à 13, comprenant en outre les étapes consistant à :
détecter une première pression associée à une pression sur la surface annulaire du vérin hydraulique (10a,b) ;
détecter une seconde pression associée à une pression sur la surface de piston du vérin hydraulique (10a,b) ;
traiter la première pression et la seconde pression en prenant en compte le rapport entre la surface annulaire et la surface de piston du vérin hydraulique (10a,b) ;
générer le signal de commande pour le dispositif hydraulique respectif sur la base des valeurs de pression traitées.

15. Procédé selon la revendication 14, comprenant en outre les étapes consistant à :
déterminer une pluralité de valeurs de différence de pression basées sur la première pression et la seconde pression en prenant en compte le rapport entre la surface annulaire et la surface de piston du vérin hydraulique (10a,b) ;
appliquer un filtre, en particulier un filtre passe-bas, à la pluralité de valeurs de différence de pression ; et
déterminer le décalage de pression sur la base de la pluralité de valeurs de différence de pression filtrées.

16. Procédé selon l'une des revendications 14 ou 15, dans lequel la première pression est associée à une pression commune sur les surfaces annulaires de tous les vérins hydrauliques du vérin hydraulique (10a,b) du système.

17. Procédé selon l'une des revendications 12 à 16, comprenant en outre les étapes consistant à :
déterminer une rotation autour d'un axe de pliage et/ou une position d'une section de rampe et/ou d'un bras ;
générer le signal de réglage sur la base de la rotation et/ou de la position déterminées.
